(19) Europäisches Patentamt
European Patent Office
Office européen des brevets

(11) Numéro de publication : **0 344 053 B1**

# (12) FASCICULE DE BREVET EUROPEEN

(45) Date de publication du fascicule du brevet : **04.03.92 Bulletin 92/10**

(51) Int. Cl.$^5$ : **C01B 3/32,** C01B 3/52

(21) Numéro de dépôt : **89401396.0**

(22) Date de dépôt : **22.05.89**

## (54) Procédé de production d'hydrogène de haute pureté par réformage catalytique de méthanol.

(30) Priorité : **27.05.88 FR 8807195**

(43) Date de publication de la demande : **29.11.89 Bulletin 89/48**

(45) Mention de la délivrance du brevet : **04.03.92 Bulletin 92/10**

(84) Etats contractants désignés : **BE DE GB IT NL**

(56) Documents cités :
**EP-A- 0 159 495**
**EP-A- 0 272 182**
**PATENT ABSTRACTS OF JAPAN, vol. 8, no. 246 (C-251)[1683], 10 novembre 1984, page 152 C 251; & JP-A-59 128 202 (NIHON KAGAKU GIJUTSU K.K.) 24-07-1984**
**CHEMICAL ABSTRACTS, vol. 108, no. 6, février 1988, page 157, résumé no. 40558t, Columbus, Ohio, US; && JP-A-62 246 803 (MITSUBISHI GAS CHEMICAL CO. INC.) 28-10-1987**

(56) Documents cités :
**CHEMICAL ABSTRACTS, vol. 94, no. 18, 4 mai 1981, page 132, résumé no. 141951p, Columbus, Ohio, US; T. YAMAMOTO: "Manufacture of hydrogen - methanol steam reforming and PSA method", & KAGAKU SOCHI 1980, 22(11), 11-18**
**CHEMICAL ABSTRACTS, vol. 100, no. 8, 20 février 1984, page 134, résumé no. 53886h, Columbus, Ohio, US; J.B. HANSEN et al.: "Reforming of methanol at medium temperature", & SOLID STATE PROTONIC CONDUCT. 2: FUEL CELLS SENS., EUR. WORKSHOP "SOLID STATE MATER. LOW MEDIUM TEMP. FUEL CELLS MONITORS, SPEC. EMPHASIS PROTON CONDUCT.", 2ND 1982 (PUB. 1983), 335-45**

(73) Titulaire : **INSTITUT FRANCAIS DU PETROLE**
**4, Avenue de Bois Préau**
**F-92502 Rueil-Malmaison (FR)**

(72) Inventeur : **Durand, Daniel**
**18, rue Michelet**
**F-92500 Rueil Malmaison (FR)**
Inventeur : **Orieux, Adrien**
**88, rue Emile Augier**
**F-92500 Rueil Malmaison (FR)**
Inventeur : **Courty, Philippe**
**91, rue Condorcet**
**F-78800 Houilles (FR)**
Inventeur : **Mouratoff, Serge**
**64, Rue Baudricourt**
**F-75013 Paris (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé de production d'hydrogène par vaporeformage catalytique du méthanol. Ce procédé permet de produire un hydrogène de pureté élevée, pouvant atteindre ou dépasser 99,99%, et avec un rendement, par rapport au méthanol, pouvant atteindre ou dépasser 95%, tel que défini ci-après.

On sait que, à l'heure actuelle, la majeure partie de l'hydrogène utilisé dans le monde provient du reformage à la vapeur ou de l'oxydation partielle du gaz naturel. Ce dernier n'est pas toujours disponible à l'endroit voulu. Aussi, pour des besoins locaux limités, on préfère partir de charges liquides plus facilement stockables telles que le méthanol.

La production d'hydrogène à partir du méthanol est fondée sur la réaction bien connue (FR-A- 1549 206 et 1599 852) de reformage catalytique du méthanol à la vapeur d'eau :

$$CH_3OH + H_2O \rightleftarrows CO_2 + 3H_2 \qquad (1)$$

laquelle peut être considérée comme la somme de

$$CH_3OH \rightleftarrows CO + 2H_2 \qquad (2)$$

et

$$CO + H_2O \rightleftarrows CO_2 + H_2 \qquad (3)$$

la réaction (2) étant inverse de celle de synthèse, et la réaction (3) étant celle de conversion du CO à la vapeur d'eau.

Toutes ces réactions sont équilibrées.

Le rendement en hydrogène, défini par rapport à la réaction (1), est défini par l'équation (4)

$$RH_2\,(\%) = \frac{100.\,H2}{3.\,CH_3OH} \qquad (4)$$

où $H_2$ et $CH_3OH$ sont respectivement le nombre de molécules gramme d'hydrogène produit et de méthanol mis en réaction.

En vertu du principe de microréversibilité, connu de l'homme de l'Art, la réaction de vaporeformage du méthanol peut être mise en oeuvre en présence de l'un quelconque des catalyseurs déjà proposés pour les réactions de synthèse du méthanol.

$$CO + 2H_2 \rightleftarrows CH_3OH \qquad (5)$$

$$CO_2 + 3H \rightleftarrows CH_3OH + H_2O \qquad (6)$$

L'opération de reformage se réalise à des températures généralement comprises entre 150 et 350°C, de préférence entre 250 et 350°C, sous des pressions comprises entre 0,5 et 10 MPa, de préférence entre 1 et 5 MPa et avec des rapports molaires eau/méthanol compris entre 1 et 10 et de préférence entre 1,5 et 5. On peut opérer en phase gazeuse ou en présence d'une phase liquide constituée, par exemple, par un hydrocarbure ou une coupe d'hydrocarbures de poids spécifique compris entre 0,65 et 0,90.

Le catalyseur de la réaction peut être un catalyseur solide classique de la synthèse haute pression du méthanol par exemple (Cr-Zn) ou basse pression, par exemple du cuivre associé à du zinc et/ou à du fer et à au moins un métal M choisi dans le groupe de l'aluminium et/ou du chrome. Ces catalyseurs se présentent généralement sous forme d'oxydes mixtes ou du mélange en des proportions diverses des oxydes simples constituants. Ces catalyseurs peuvent être conditionnés soit en éléments massiques, c'est-à-dire constitués par des oxydes des éléments actifs, soit en éléments supportés. Dans ce dernier cas leurs liants ou leurs supports peuvent être par exemple de la silice, de l'alumine, le mélange de ces deux matériaux, ou un matériau plus complexe tel que les aluminates à structure spinelle (aluminate de magnésium, de zinc, de fer ou de cobalt) ou de structure perowskite (aluminate de terres rares de numéros atomiques 57 à 71 inclus) ou encore être constitués d'oxydes mixtes à base de zircone ($ZrO_2$-MgO, $ZrO_2$ terres rares, etc...)

Cette réaction catalytique de vaporeformage du méthanol pour la production d'hydrogène est généralement conduite en phase gazeuse (brevet belge n°884.720, demande de brevet japonais J-A-59128202 et demande de brevet français FR-A-2.608.144) mais aussi en phase liquide (demande de brevet français FR-A-2.611.194). Cette réaction, d'après les équations de réactions 1 et 2 donne naissance à des sous produits dont les plus importants sont le gaz carbonique (environ 25% volume) et l'oxyde de carbone (environ 0,5 à 3% volume).

Différents systèmes de purification de l'hydrogène sont généralement proposés.

On connaît (par exemple brevet US-A- 4553 981) un système fondé sur le principe d'adsorption sélective sous pression des constituants d'un mélange gazeux, autres que l'hydrogène, en présence de masses adsorbantes (tamis moléculaire, charbon actif...) que l'on régénère généralement à température ambiante, par dépressurisation et purge. Pour réaliser, en continu, le cycle complet (généralement appelé Pressure Swing Adsorption = PSA) deux réacteurs minimum d'adsorbants sont nécessaires: le premier en phase d'adsorption tandis que le second est opéré selon les différentes phases de régénération.

Ce procédé présente l'avantage de produire un hydrogène de très grande pureté (par exemple au moins égale à 99,99%) et il est tout à fait adapté à la pression opératoire (par exemple 0,5 à 5 MPa) du procédé de vaporeformage du méthanol, tel que décrit, par exemple dans la présente invention. Cependant le rendement en hydrogène (hydrogène sortie/hydrogène entrée en pour-cent) est assez faible (70 à 80%) et incompatible en l'état avec les caractéristiques recherchées dans la présente invention (rendement en hydrogène par rapport au méthanol de charge au moins égal à 95%). De plus, ce rendement diminue avec la pression opératoire; de 80% environ à 3 MPa, il devient 70% environ à 1 MPa.

D'autres systèmes permettent de purifier l'hydrogène, en particulier par décarbonatation du gaz par lavage dans un solvant (méthanol, amines...) suivi :

– soit d'une conversion catalytique de l'oxyde de carbone (DE-A- 3332314)

– soit d'une méthanation et/ou méthanolation des oxydes de carbone mais, uniquement si leur concentration n'est pas trop élevée (de l'ordre du pourcent) (EP-A- 139423).

Une association de ces 3 systèmes permet d'augmenter le rendement en hydrogène, au moins à 95%, mais malheureusement la pureté de l'hydrogène ne dépasse généralement pas les 99,95%, ce qui se révèle insuffisant pour de nombreuses utilisations du produit.

Pour améliorer le rendement en hydrogène (pureté supérieure à 99,99%), la demande de brevet japonais J-A-59128202 propose le recyclage d'une partie de la purge du PSA (purge riche en hydrogène) en amont du réacteur. Ce dispositif permet une amélioration de 10 à 15% du rendement en hydrogène par rapport au rendement maximum (70 à 80%) indiqué ci-avant pour le procédé PSA couplé à un vaporeformage de méthanol, sans recyclage de la purge du PSA.

Tout en pouvant conduire à un rendement amélioré, mais très inférieur à celui décrit dans la présente demande d'invention, ce procédé présente l'inconvénient de recycler au réacteur des quantités importantes de $CO_2$, lequel dans les conditions thermiques de la réaction se comporte essentiellement en gaz inerte et s'accumule, provoquant en outre une diminution sensible de l'activité du catalyseur.

Le nouveau procédé que propose la demanderesse permet d'obtenir simultanément un hydrogène de pureté au moins égale à 99,99% et un rendement en hydrogène au moins égal à 95%, même si la réaction de vaporeformage du méthanol est conduite dans la partie des plus basses pressions par rapport à des pressions comprises entre 0,5 er 5 MPa, c'est-à-dire entre 0,8 et 2 MPa par exemple, dans un réacteur isotherme ou adiabatique , à écoulement axial ou radial, opéré en phase gazeuse ou encore en présence d'une phase liquide jouant le rôle de fluide caloporteur.

Le procédé, objet de la présente invention, est défini comme suit procédé de production d'hydrogène par vaporeformage catalytique du méthanol, dans lequel on fait réagir de l'eau avec du méthanol dans une zone de réaction, au contact d'un catalysateur de conversion du méthanol en hydrogène sous pression comprise entre 0,5 et 5 MPa, puis on contacte l'effluent de la zone de réaction avec un agent d'adsorption sous pression comprise entre 0,5 et 5 MPa, de manière à adsorber les sous-produits, y inclus du dioxyde de carbone, et à libérer un gaz riche en hydrogène, et dans lequel on désorbe périodiquement sous pression comprise entre 0,1 et 0,4 MPa les sous produits qui avaient été adsorbés et enfin on recycle à la zone de réaction un courant de gaz désorbé renfermant une partie au moins desdits sous-produits caractérisé en ce que le gaz recyclé est soumis à une recompression puis à un traitement d'enlèvement d'au moins une portion du dioxyde de carbone sous pression comprise entre 0,5 et 5 MPa avant renvoi à la zone de réaction. Il est possible de soumettre l'effluent de la zone de réaction à un refroidissement avant mise en contact avec l'agent d'adsorption de manière à condenser de l'eau et du méthanol n'ayant pas réagi, et de renvoyer l'eau et le méthanol condensés à la zone de réaction. Ce gaz de désorption renfermant principalement de l'hydrogène et du gaz carbonique peut être soumis à une recompression puis à un traitement d'enlèvement, sous pression relativement élevée, d'au moins une portion du dioxyde de carbone, soit à la température du réacteur de vaporeformage du méthanol, soit à la température du réacteur de conversion du CO. avant renvoi à la zone de vaporeformage du méthanol. Ainsi on peut envoie à la zone de réaction 90 à 99 % en volume du gaz recyclé, dont au moins une partie du dioxyde de carbone a été enlevée. La décarbonatation (enlèvement de $CO_2$) peut être réalisée par un lavage soit par l'eau et/ou le méthanol de la charge soit par une solution aqueuse d'amine ou d'alcanolamine, par exemple une solution aqueuse de mono et/ou de diethanolamine. Dans ce dernier cas on peut utiliser une solution, par exemple, deux fois molaire de diethanolamine pour réaliser le lavage des gaz à une pression sensiblement équivalente à celle du réacteur de vaporeformage du méthanol et à une température voisine de la température ambiante, par exemple 0-40°C et 0,5 à 5 MPa. On peut enlever ainsi 80 à 100 % du dioxyde de carbone de gaz recyclé. La solution obtenue, avant recyclage à la tour de lavage, peut être régénérée par chauffage à une température comprise, par exemple, entre 60 et 140°C, avant dépressurisation à une pression voisine de la pression atmosphérique. Dans ces conditions le taux de décarbonation du gaz peut être compris entre 95 et 99,9%.

Pour atteindre la pression ci-dessus, il est nécessaire de recomprimer les gaz de purge qui sont habituellement à 0,1-0,4 MPa .

Dans une version perfectionnée dudit procédé, l'effluent gazeux de l'unité de décarbonatation, qui renferme par exemple 3 à 7% en volume de CO, est traité dans un réacteur de conversion à basse température du CO, selon la réaction (3) ci-dessus. L'effluent gazeux issu de ce convertisseur de CO est ensuite recyclé, au moins en partie, à l'entrée du réacteur de vaporeformage du méthanol. Ainsi au moins une partie du gaz recyclé, après enlèvement d'au moins une portion du dioxyde de carbone, est traitée au contact d'un catalyseur de conversion de CO avant renvoi à la zone de réaction.

Dans ce réacteur de conversion du CO, renfermant un catalyseur massique, à base de cuivre associé à du zinc et/ou du fer et éventuellement à de l'aluminium et/ou du chrome, on opère à une température comprise entre 160 et 300°C mais de préférence entre 180 et 250°C, une pression comprise entre 0,5 et 10 MPa mais de préférence entre 0,9 et 4,5 MPa et avec un rapport molaire $H_2O/CO$ compris entre 1 et 30 mais de préférence 2 à 20. L'eau nécessaire à la réaction de vaporeformage du méthanol, dont le rapport massique $H_2O/CH_3OH$ à l'entrée du réacteur est défini précédemment, peut être introduite, en totalité ou en partie, à l'entrée du réacteur de conversion du CO, avant recyclage - on peut toutefois en purger une faible partie.

Cette version perfectionnée du procédé, par des conditions opératoires mieux adaptées à la conversion du CO : température plus basse, rapport molaire $H_2O/CO$ plus élevé, plus faible teneur en $H_2$ et $CO_2$, permet, en abaissant la teneur en CO de quelques pourcent à moins de 1000 ppm (partie par million), d'augmenter, selon la réaction (3) ci-dessus , le rendement en hydrogène du procédé.

De plus, le gaz désorbé, après recompression et enlèvement du dioxyde de carbone, peut être préchauffé, soit à la température du réacteur de vaporeformage du méthanol (cas de la réalisation selon l'invention, en l'absence d'un réacteur de conversion de CO), soit à la température du réacteur de conversion du CO (cas du mode perfectionné de réalisation selon l'invention, en présence d'un réacteur de conversion de CO).

L'adsorption est effectuée le plus souvent sous 0,5 à 5MPa de pression totale, et à une température de 20 à 50°C, par exemple.

La désorption (purge) est effectuée le plus souvent sous 0,1 à 0,4 MPa de pression totale.

La totalité du gaz de purge peut être recyclée ; on préfère toutefois en recycler 90-99%, dont on enlève le $CO_2$ comme explique plus haut.

La figure 1 décrit un mode de réalisation de l'invention.

La figure 2 décrit un mode perfectionné de mise en oeuvre de l'invention.

Le méthanol (1) et l'eau (2) parviennent au réacteur (4) par la conduite (3). Le réacteur (4) reçoit également un recyclage (5) de méthanol et d'eau non-convertis et des gaz recyclés (15) provenant du décarbonateur (14). L'effluent du réacteur parvient par la conduite (6) au condenseur (7) au fond duquel on recueille un condensat dont une partie (5) est recyclée et une autre partie (8) est évacuée comme purge. Les gaz non condensés sont envoyés par la conduite (9) au dispositif d'adsorption (10) de type PSA ou autre. On recueille de l'hydrogène de haute pureté (11). Périodiquement on envoie les gaz de conversion vers un autre adsorbeur, non représenté, et on régénère l'adsorbant (purge) par dépressurisation et balayage d'hydrogène. On recueille ainsi un courant de purge (12) qui après passage dans le compresseur (13) parvient à une unité (14) de lavage aux amines comportant lavage et régénération de la solution d'amine. Le gaz débarrassé d'au moins la majeure partie de $CO_2$ est en partie recyclé (15) et en partie déchargé (16). Après régénération (enlèvement d'une partie du $CO_2$), la solution d'amine est recyclée à l'unité de lavage (14).

La figure 2 comporte les mêmes éléments que la figure 1, à l'exception de ce qui suit : l'eau de réaction est introduite en partie ou en totalisé (en totalité sur la fig.2) par la conduite (18) au lieu de la conduite (2), et le gaz décarbonaté issu de l'unité de lavage (14) additionné de cette eau passe dans un convertisseur de CO (19) avant de parvenir aux conduites (15 et 16).

En règle habituelle, la purge (16) peut représenter 1 à 30% de préférence 1 à 10% en volume du gaz provenant du décarbonateur (14) ou du convertisseur (19); le complément est recyclé (15).

La purge (8) représente, par exemple, 0,1 à 5% de l'effluent liquide du condenseur (7), le complément étant recyclé (5).

Le procédé de l'invention présente donc les avantages de pouvoir produire à la fois :

– un hydrogène de très grande pureté (supérieure à 99,99%)
– avec un rendement supérieur à 95% ce qui permet d'économiser de la matière première (méthanol)
– même sous une pression relativement faible (environ 1 MPa) qui évite d'utiliser des matériaux spéciaux, requis généralement pour pouvoir travailler à plus forte pression.

Exemple 1 comparatif

Le schéma est celui de la figure 1; toutefois les éléments (13) à (17) sont absents et la purge (12) est brûlée. On injecte, dans un réacteur tubulaire contenant 800 l de catalyseur au cuivre, (par exemple contenant en

poids 40% Cu, 24% Fe, 11% Cr), 10,3 kmole/h d'eau et 10,25 kmole/h de méthanol. La pression de la réaction de vaporeformage est maintenue à 1 MPa et la température du fluide caloporteur à 270°C. Sous ces conditions le taux de transformation du methanol est d'environ 90%. Après condensation, les réactifs liquides ($H_2O$, $CH_3OH$) non transformés sont en partie (99%) recyclés au réacteur et en partie (1%) soutirés comme purge. Les effluents gazeux, non condensés, sont séparés par adsorption sélective (PSA). Avec un taux de récupération, de l'hydrogène à 99,99% de pureté, de 70% à la sortie du PSA le rendement (R) en hydrogène défini par la relation :

nbre moles $H_2$ purifié (sortie PSA)
3.nbre moles de méthanol (appoint)

est de 66%. La purge du PSA (contenant 30% de l'hydrogène produit) est mélangée au gaz qui alimente les brûleurs de l'installation.

EXEMPLE 2 comparatif

Le schéma est celui de la figure 1; toutefois les éléments (14) et (17) sont absents. Le catalyseur et les conditions opératoires du réacteur de vaporeformage sont identiques à celles de l'exemple 1 à l'exception que l'on recycle après recompression, la fraction riche en hydrogène de la purge du PSA, le reste étant évacué. Cette fraction recyclée peut représenter environ 40% en volume de la purge totale et renfermer environ 60% de la quantité d'hydrogène contenue dans cette purge.

En procédant ainsi on obtient un hydrogène à 99,99% de pureté avec seulement un rendement en hydrogène d'environ 83,2%.

En outre, on observe une désactivation (tableau récapitulatif) un peu plus rapide du catalyseur.

EXEMPLE 3 (fig.1)

La réaction de vaporeformage du méthanol (4) et la purification (10) de l'hydrogène produit (par PSA) sont conduites selon les conditions opératoires de l'exemple 1. Cependant la purge du PSA (12) au lieu d'être brûlée, subit une recompression à 1,1 MPa (13) puis un lavage (14), par une solution aqueuse de diethanolamine (4M) à 30°C sous 1,1 MPa pour éliminer 99% du dioxyde de carbone, lequel dioxyde de carbone est évacué par la conduite (17), et enfin est recyclée (15), à environ 95%, à l'entrée du réacteur. 5% sont donc éliminés comme purge (16).

En procédant ainsi, on obtient une production d'hydrogène de pureté égale à 99,99% avec un rendement, par rapport au méthanol, de 95,1%.

EXEMPLE 4 (fig.2)

La réaction de vaporeformage du méthanol, et les étapes de purification de l'hydrogène et de décarbonatation de la purge du PSA sont conduites selon les conditions de l'exemple 3. Toutefois cette purge décarbonatée pouvant contenir 5 à 10% volume d'oxyde de carbone est envoyée, sous 1,1 MPa, dans un réacteur de conversion basse température du CO. Ce réacteur (19) renferme 150 kg de catalyseur au cuivre (par exemple 50% Cu, 4% Al, 25% Zn); on injecte (18) à co-courant avec le gaz de purge 10,9 kmol d'eau. La réaction de conversion du CO et conduite sous 1,05 MPa, à une température d'entrée de 210°C, ce qui permet de convertir 91% du CO. Comme dans l'exemple 1 on recycle au réacteur de vaporeformage du méthanol, 95% des gaz issus du réacteur de conversion du CO; 5% sont éliminés dans la purge (16). En procédant ainsi, le rendement (R) en hydrogène de pureté 99,99% est de 95,9%.

Tableau récapitulatif

Dans le tableau ci-dessous sont portés, pour chacun des exemples décrits, les rendements (R) en hydrogène (pureté supérieure à 99,99%) obtenus lors de la réaction de reformage du méthanol sous une pression de 1 MPa, avec ou non, un recyclage total ou en partie de la purge du PSA, décarbonatée ou non.

Par ailleurs, on a porté les températures exigées au réacteur de vaporeformage pour produire la même quantité d'hydrogène (à 99,99% de pureté), avec un taux de transformation du méthanol de 90% par passe, après 100 et 1500 heures de fonctionnement.

| Exemples | Rendement ($R = H_2/3CH_3OH$) en hydrogène à 99,99% de pureté | Température (°C) pour une conversion du methanol de 90% par passe | |
|---|---|---|---|
| | | après 100h | après 1500h |
| 1 | 66% | 280 | 285 |
| 2 | 81,2% | 275 | 285 |
| 3 | 95,1% | 270 | 275 |
| 4 | 95,9% | 270 | 275 |

On constate ainsi la supériorité des résultats obtenus (exemples 3 et 4) : meilleur rendement, moindre désactivation.

## Revendications

1. Procédé de production d'hydrogène par vaporeformage catalytique du méthanol, dans lequel on fait réagir de l'eau avec du méthanol dans une zone de réaction, au contact d'un catalyseur de conversion du méthanol en hydrogène sous pression comprise entre 0,5 et 5 MPa, puis on contacte l'effluent de la zone de réaction avec un agent d'adsorption sous pression comprise entre 0,5 et 5 MPa, de manière à adsorber les sous-produits, y inclus du dioxyde de carbone, et à libérer un gaz riche en hydrogène, et dans lequel on désorbe périodiquement sous pression comprise entre 0,1 et 0,4 MPa les sous produits qui avaient été adsorbés et enfin on recycle à la zone de réaction un courant de gaz désorbé renfermant une partie au moins desdits sous-produits caractérisé en ce que le gaz recyclé est soumis à une recompression puis à un traitement d'enlèvement d'au moins une portion du dioxyde de carbone sous pression comprise entre 0,5 et 5 MPa avant renvoi à la zone de réaction.

2. Procédé selon la revendication 1, dans lequel on envoie à la zone de réaction 90-99% en volume du gaz recyclé dont au moins une partie du dioxyde de carbone a été enlevée.

3. Procédé selon la revendication 1 ou 2, dans lequel l'effluent de la zone de réaction est soumis à un refroidissement avant mise en contact avec l'agent d'adsorption, de manière à condenser de l'eau et du méthanol n'ayant pas réagi, et on renvoie l'eau et le méthanol condensés à la zone de réaction.

4. Procédé selon l'une des revendications 1 à 3, dans lequel au moins une partie du gaz recyclé, après enlèvement d'au moins une portion du dioxyde de carbone, est traitée au contact d'un catalyseur de conversion du monoxyde de carbone avant renvoi à la zone de réaction.

5. Procédé selon l'une des revendications 1 à 4, dans lequel l'enlèvement du dioxyde de carbone est effectué par lavage au moyen d'un solvant du groupe eau, méthanol, monoéthanolamine, diéthanolamine et leurs mélanges.

6. Procédé selon l'une des revendications 1 à 5, dans lequel on enlève 80 à 100% du dioxyde de carbone du gaz recyclé.

7. Procédé selon l'une des revendications 1 à 6, dans lequel la réaction de l'eau avec le méthanol est conduite en présence d'une phase liquide constituée par un hydrocarbure ou une coupe d'hydrocarbures de poids spécifique compris entre 0, 65 et 0,90.

8. Procédé selon l'une des revendications 1 à 7, dans lequel la réaction de l'eau avec le méthanol est conduite en présence d'un catalyseur contenant du cuivre, du zinc et/ou du fer, et au moins un métal M choisi dans le groupe de l'aluminium et/ou du chrome.

9. Procédé selon l'une des revendications 1 à 8, dans lequel le gaz désorbé après recompression et enlèvement du dioxyde de carbone est préchauffé, avant recyclage, soit à la température du réacteur de vaporeformage du méthanol, soit à la température du réacteur de conversion du CO.

## Patentansprüche

1. Verfahren zur Erzeugung von Wasserstoff durch katalytische Dampfreformierung des Methanols, bei dem man Wasser mit Methanol in eine Reaktionszone in kontakt mit einem katalysator zur Umwandlung des Methanols in Wasserstoff unter Druck zwischen 0,5 und 5 MPa reagieren läßt, dann den Abstrom aus der Reaktionszone mit einem Adsorptionsmittel unter Druck zwischen 0,5 und 5 MPa derart kontaktiert, daß die Nebenprodukte, einschließlich des kohlendioxids, adsorbiert werden und ein an Wasserstoff reiches Gas freigesetzt wird und bei dem man periodisch unter Druck zwischen 0,1 und 0,4 MPa die Nebenprodukte, die adsorbiert worden sind, desorbiert und schließlich zur Reaktionszone einen Strom desorbierten Gases rezyklisiert, der wenigstens einen Teil dieser Nebenprodukte umschließt, dadurch gekennzeichnet, daß das rezyklisierte Gas einer Rekompression, dann einer Behandlung ausgesetzt wird, bei der wenigstens ein Teil des unter einem Druck zwischen 0,5 und 5 MPa stehenden kohlendioxids vor der Rücksendung zur Reaktionszone entnommen wird.

2. Verfahren nach Anspruch 1, bei dem man zur Reaktionszone 90 bis 99 Vol.-% des rezyklisierten Gases schickt, dem wenigstens ein Teil des kohlendioxids entnommen wurde.

3. Verfahren nach Anspruch 1 oder 2, bei dem der Abstrom aus der Reaktionszone einer kühlung vor der kontaktierung mit dem Adsorptionsmittel derart ausgesetzt wird, daß Wasser und nicht umgesetztes Methanol kondensiert werden und man das Wasser und das Methanol, die kondensiert sind, zur Reaktionszone zurückschickt.

4. Verfahren nach einem der Ansprüche 1 bis 3, bei dem wenigstens ein Teil des rezyklisierten Gases nach Entnahme wenigstens eines Teils des kohlendioxids in kontakt mit einem katalysator zur Umwandlung des kohlenmonoxids vor dem Zurückschicken zur Reaktionszone behandelt wird.

5. Verfahren nach einem der Ansprüche 1 bis 4, bei dem die Entfernung des kohlendioxids durch Waschen vermittels eines Lösungsmittels aus der Gruppe Wasser, Methanol, Monoethanolamin, Diethanolamin und deren Gemischen durchgeführt wird.

6. Verfahren nach einem der Ansprüche 1 bis 5, bei dem man 80 bis 100 % des kohlendioxids des rezyklisierten Gases entfernt.

7. Verfahren nach einem der Ansprüche 1 bis 6, bei dem die Reaktion des Wassers mit dem Methanol in Anwesenheit einer flüssigen Phase durchgeführt wird, die gebildet wird durch einen kohlenwasserstoff oder einen Schnitt von kohlenwasserstoffen mit einem spezifischen Gewicht zwischen 0,65 und 0,90.

8. Verfahren nach einem der Ansprüche 1 bis 7, bei dem die Reaktion des Wassers mit dem Methanol durchgeführt wird in Anwesenheit eines kupfer, Zink und/oder Eisen enthaltenden katalysators und wenigstens einem Metall M, das gewählt ist aus der Gruppe Aluminium und/oder Chrom.

9. Verfahren nach einem der Ansprüche 1 bis 8, bei dem das desorbierte Gas nach der Rekompression und Entnahme des kohlendioxids vorgewärmt wird vor dem Rezyklisieren, entweder auf die Temperatur des Methanoldampfreformierungsreaktors oder auf die Temperatur des CO Umwandlungsreaktors.

## Claims

1. Process for producing hydrogen by catalytic system reforming of methanol, in which water and methanol are reacted over a methanol to hydrogen conversion catalyst under pressure, between 0.5 and 5 MPa, then the effluent of the reaction zone is contacted with an adsorption agent under pressure between 0.5 and 5 MPa, such that by-products of the reaction, including carbon dioxide, are adsorbed and a hydrogen-rich gas is liberated, and in which by-products which have been adsorbed are periodically desorbed under pressure between 0.1 and 0.4 MPa, and finally a flow of desorbed gas containing at least part of said by-products is recycled in the reaction zone, wherein the recycled gas is submitted to recompression and removal of at least a portion of the carbon dioxide under pressure between 0.5 and 5 MPa before being sent back to the reaction zone.

2. Process according to claim 1 in which 90-99% in volume of the recycled gas, from which at least part of the carbon dioxide has been removed, is sent to the reaction zone.

3. Process according to claim 1 or 2 in which the effluent of the reaction zone is cooled down before being contacted with the adsorption agent such that the unreacted water and methanol are condensed, and in which the condensed water and methanol are sent back to the reaction zone.

4. Process according to one of claims 1 to 3 in which at least part of the recycled gas, after removal of at least a portion of the carbon dioxide, is treated by contact with a carbon monoxide conversion catalyst before being sent back to the reaction zone.

5. Process according to one of claims 1 to 4 in which removal of carbon dioxide is carried out by washing with a solvent from the group water, monoethanolamine, diethanolamine and their mixtures.

6. Process according to one of claims 1 to 5 in which 80 to 100% of the carbon dioxide of the recycled gas is removed.

7. Process according to one of claims 1 to 6 in which the reaction of water with methanol is carried out in the presence of a liquid phase comprised of a hydrocarbon or a hydrocarbon cut of specific weight between 0.65 and 0.90.

8. Process according to one of claims 1 to 7 in which the reaction of water with methanol is carried out in the presence of a catalyst containing copper, zinc and/or iron and at least one metal M chosen from the aluminium and/or chronium group.

9. Process according to one of claims 1 to 8 in which the desorbed gas, after recompression and removal of carbon dioxide, is preheated before recycling either to the temperature of the methanol steam reforming reactor or to the temperature of the Co conversion reactor.

FIG.1

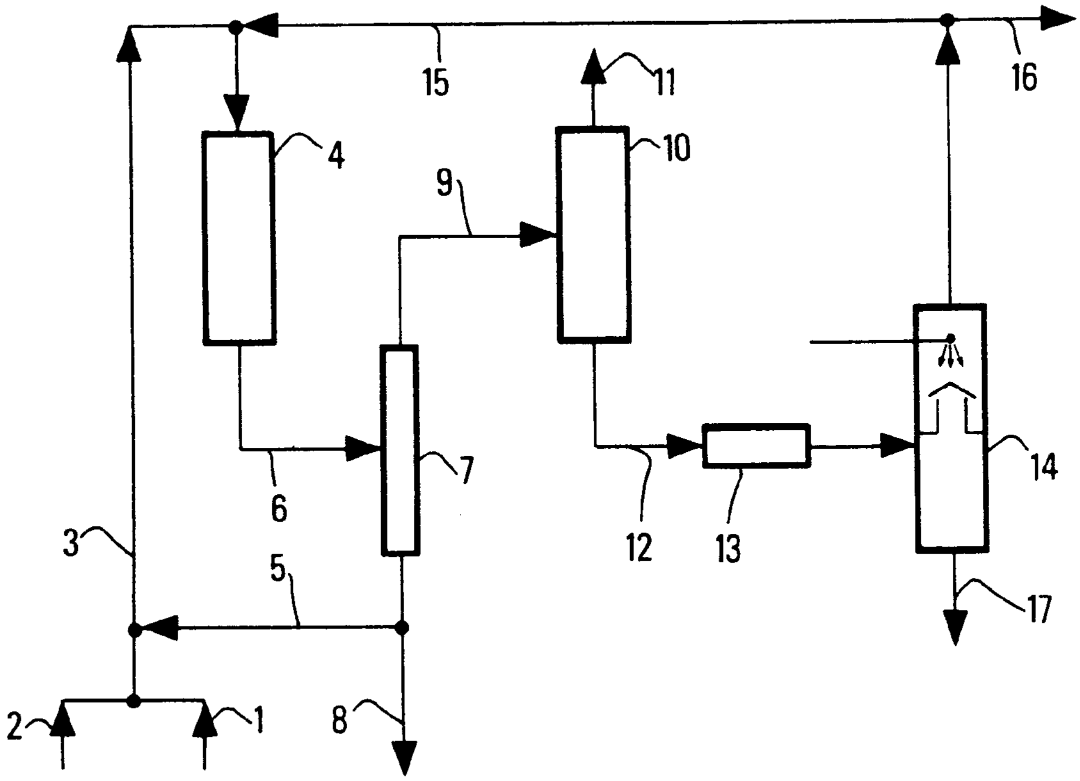
15
11
16
4
10
9
7
14
6
12
13
3
5
17
2
1
8

FIG.2

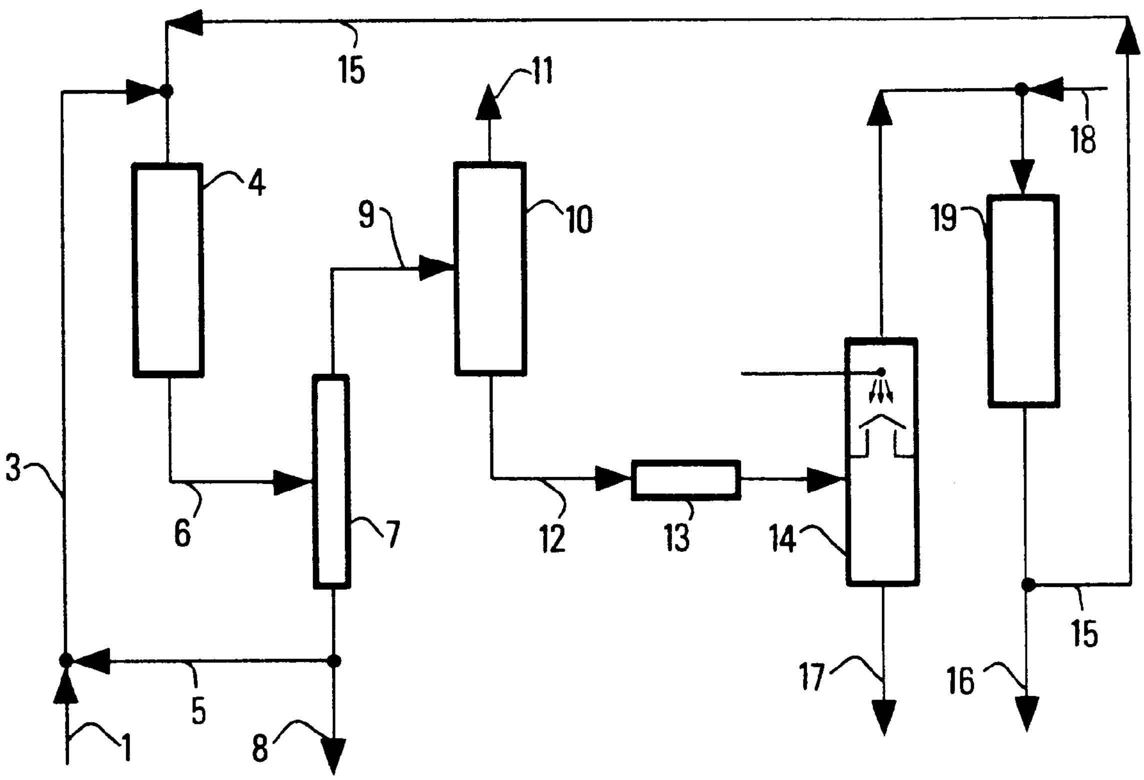
15
11
18
4
9
10
19
3
6
7
12
13
14
15
17
16
5
1
8